# EUROPÄISCHE PATENTANMELDUNG

(11) **EP 3 189 877 A1**
(43) Veröffentlichungstag der Anmeldung: **12.07.2017**
(21) Anmeldenummer: 16193571.3
(22) Anmeldetag: 12.10.2016
(51) Int. Cl.: A63B 22/06, B62K 21/22, B62K 21/16, F16B 2/18, F16B 21/02

(54) **LENKERVORRICHTUNG FÜR EIN TRAININGSGERÄT SOWIE TRAININGSGERÄT MIT EINER DERARTIGEN LENKERVORRICHTUNG**

(30) Priorität: 11.01.2016 DE 102016100364
(71) Anmelder: Heinz Kettler GmbH & Co. KG, 59469 Ense (DE)
(72) Erfinder: Kettler, Joachim, 59469 Ense (DE)
(74) Vertreter: Basfeld, Rainer

(57) **Zusammenfassung**

Lenkervorrichtung für ein Trainingsgerät, umfassend einen Lenker (1), eine Lenkerstütze (2) und Verbindungsmittel (3), die den Lenker (1) an der Lenkerstütze (2) haltern, wobei in einem ersten Zustand der Verbindungsmittel (3) die Stellung des Lenkers (1) veränderbar ist, wobei in einem zweiten Zustand der Verbindungsmittel (3) die Stellung des Lenkers (1) festgelegt ist, und wobei die Verbindungsmittel (3) Exzentermittel umfassen.

## Beschreibung

Die vorliegende Erfindung betrifft eine Lenkervorrichtung für ein Trainingsgerät gemäß dem Oberbegriff des Anspruchs 1 sowie ein Trainingsgerät mit einer derartigen Lenkervorrichtung.

Lenkervorrichtungen und Trainingsgeräte der vorgenannten Art sind aus der DE 20 2004 011 719 U1 bekannt. Das darin beschriebene Trainingsgerät ist als Fahrradheimtrainer ausgebildet und weist einen relativ zu einer Lenkerstütze verstellbaren Lenker auf. Die Verstellung des Lenkers ist dabei relativ aufwendig gestaltet.

Das der vorliegenden Erfindung zugrunde liegende Problem ist die Schaffung einer Lenkervorrichtungen der eingangs genannten Art, bei der die Verbindungsmittel zur Verstellung des Lenkers einfacher gestaltet sind. Weiterhin soll ein Trainingsgerät mit einer derartigen Lenkervorrichtung angegeben werden.

Dies wird erfindungsgemäß durch eine Lenkervorrichtungen der eingangs genannten Art mit den kennzeichnenden Merkmalen des Anspruchs 1 sowie durch ein Trainingsgerät der eingangs genannten Art mit den kennzeichnenden Merkmalen des Anspruchs 11 erreicht. Die Unteransprüche betreffen bevorzugte Ausgestaltungen der Erfindung.

Gemäß Anspruch 1 ist vorgesehen, dass die Verbindungsmittel Exzentermittel umfassen. Auf diese Weise kann mit einfachen Mitteln die Verstellbarkeit des Lenkers gewährleistet werden.

Dabei kann vorgesehen sein, dass die Verbindungsmittel Klemmmittel umfassen, die in dem zweiten Zustand der Verbindungsmittel einen Abschnitt des Lenkers klemmend halten. Insbesondere können dabei die Klemmmittel zwei einander zumindest abschnittsweise gegenüberliegende Klemmbacken umfassen, die an unterschiedlichen Seiten des Abschnitt des Lenkers anliegen.

Es besteht die Möglichkeit, dass die Exzentermittel in dem zweiten Zustand der Verbindungsmittel die Klemmmittel an den Abschnitt des Lenkers pressen. Auf diese Weise ergibt sich ein einfacher Wirkzusammenhang zwischen den Exzentermitteln einerseits und den den Abschnitt des Lenkers klemmenden Klemmmitteln beziehungsweise Klemmbacken andererseits.

Es kann vorgesehen sein, dass die Verbindungsmittel eine bewegbare, insbesondere verschwenkbare, Handhabe umfassen, durch deren Bewegung, insbesondere deren Verschwenkung, die Verbindungsmittel aus dem ersten Zustand in den zweiten Zustand beziehungsweise aus dem zweiten Zustand in den ersten Zustand überführt werden. Durch Betätigen der Handhabe lassen sich somit die Klemmmittel lösen, so dass der Lenker verstellt werden kann.

Es besteht die Möglichkeit, dass die Exzentermittel an der Handhabe angeordnet sind. Dies kann beispielsweise dadurch realisiert werden, dass die Handhabe um eine Schwenkachse verschwenkbar ist und eine Außenkontur aufweist, die mit den Klemmmitteln in Wirkverbindung steht, wobei ein erster Abschnitt der Außenkontur einen größeren Abstand zur Achse aufweist als ein zweiter Abschnitt der Außenkontur. Das einfache Verschwenken der Handhabe kann somit das Festlegen beziehungsweise Lösen der Klemmmittel verursachen.

Dabei kann vorgesehen sein, dass die Handhabe über einen Bolzen mit den Klemmmitteln verbunden ist, wobei der Bolzen insbesondere an der Schwenkachse oder im Bereich der Schwenkachse der Handhabe gelenkig angebracht ist. Dadurch kann erreicht werden, dass durch ein Verschwenken der Handhabe der Bolzen die Klemmbacken an den Lenker presst.

Es besteht die Möglichkeit, dass die Verbindungsmittel ein Distanzstück umfassen, das zwischen der Handhabe und den Klemmmitteln angeordnet ist. Durch ein derartiges Distanzstück kann die Wirkverbindung zwischen der Außenkontur der Handhabe einerseits und den Klemmmitteln beziehungsweise einer der Klemmbacken andererseits optimiert werden, weil die Kontur des Distanzstückes entsprechend angepasst werden kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer erfindungsgemäßen Lenkervorrichtung in einem ersten Zustand der Verbindungsmittel;
- Fig. 2: einen Schnitt durch die Lenkervorrichtung gemäß den Pfeilen II - II in Fig. 1;
- Fig. 3: einen Fig. 2 entsprechenden Schnitt durch die Lenkervorrichtung gemäß Fig. 1 vor dem Beginn der Schwenkbewegung einer Handhabe der Lenkervorrichtung;
- Fig. 4: einen Fig. 3 entsprechenden Schnitt durch die Lenkervorrichtung gemäß Fig. 1 nach dem Beginn der Schwenkbewegung der Handhabe;
- Fig. 5: einen Fig. 4 entsprechenden Schnitt durch die Lenkervorrichtung gemäß Fig. 1 nach dem weiteren Durchführen der Schwenkbewegung der Handhabe;
- Fig. 6: einen Fig. 5 entsprechenden Schnitt durch die Lenkervorrichtung gemäß Fig. 1 nach dem vollständigen Durchführen der Schwenkbewegung der Handhabe;
- Fig. 7: eine perspektivische Detailansicht auf einen Teil des Lenkers, eine Klemmbacke und einen Bolzen der Lenkervorrichtung gemäß Fig. 1.

In den Figuren sind gleiche und funktional gleiche Teile mit gleichen Bezugszeichen versehen.

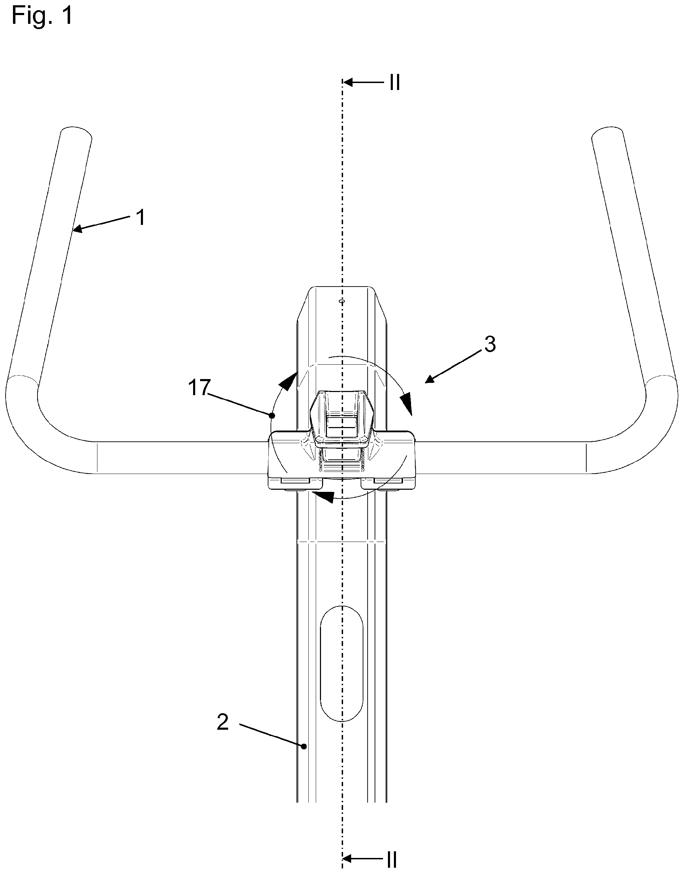

Die in Fig. 1 abgebildete Lenkervorrichtung eines Trainingsgeräts umfasst einen Lenker 1 und eine Lenkerstütze 2, die über Verbindungsmittel 3 mit dem Lenker 1 verbunden ist. Durch die Pfeile 17 wird angedeutet, dass in einem ersten Zustand der Verbindungsmittel 3 der Lenker 1 relativ zu der Lenkerstütze 2 bewegbar ist, um die Stellung des Lenkers 1 an die Bedürfnisse des Benutzers des Trainingsgeräts anzupassen.

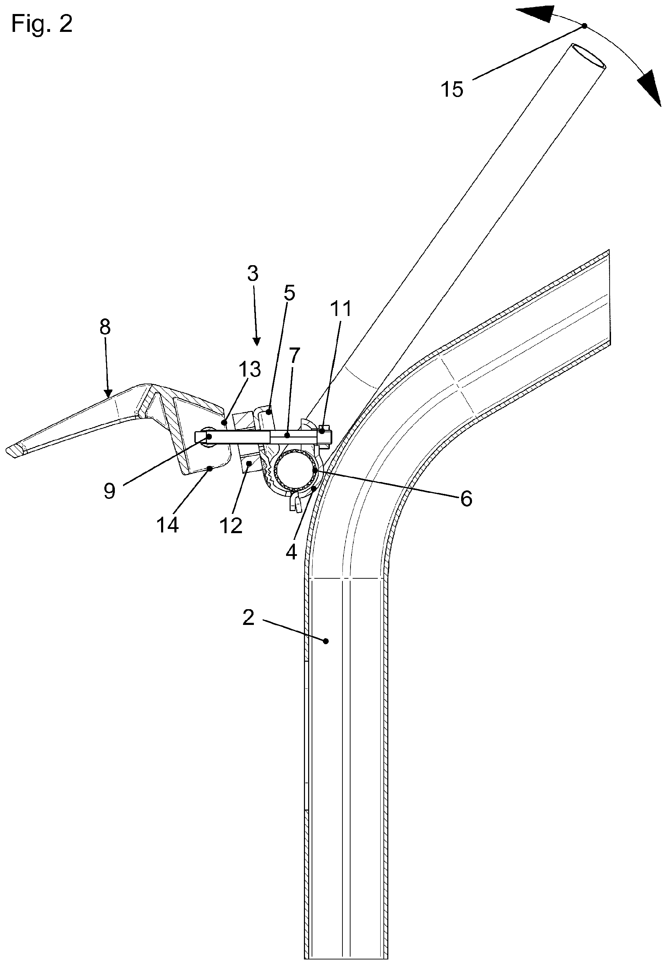

Aus Fig. 2 ist der Aufbau der Verbindungsmittel 3 ersichtlich. Die Verbindungsmittel 3 umfassen zwei einander gegenüberliegende, als Klemmmittel dienende Klemmbacken 4, 5, die einen rohrförmigen Abschnitt 6 des Lenkers 1 umgreifen. Die in Fig. 2 rechte, erste Klemmbacke 4 ist mit der Lenkerstütze 2 verbunden, insbesondere an dieser angeschweißt. Die in Fig. 2 linke, zweite Klemmbacke 5 ist mit der ersten Klemmbacke 4 verbunden und gegenüber dieser verschwenkbar.

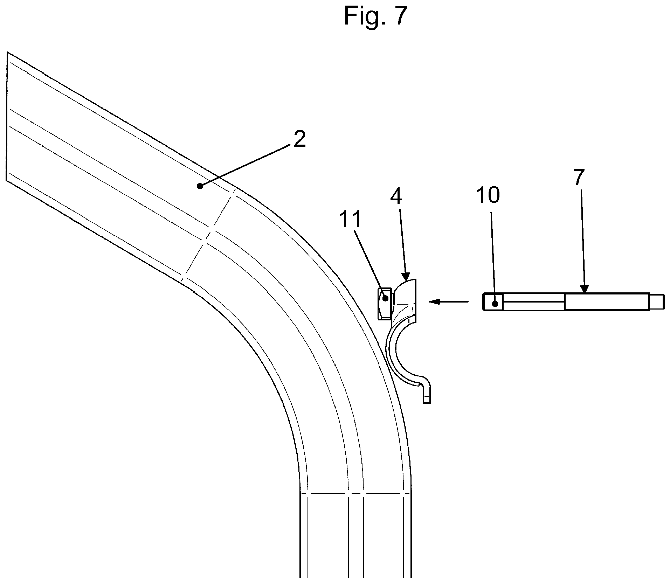

Die Verbindungsmittel 3 umfassen weiterhin einen Bolzen 7 und eine Handhabe 8, die um eine Schwenkachse 9 verschwenkbar ist. Der Bolzen 7 ist mit einem seiner Enden gelenkig im Bereich der Schwenkachse 9 mit der Handhabe 8 verbunden. Das andere der Enden des Bolzens 7 weist ein Außengewinde 10 auf, das in ein an der ersten Klemmbacke 4 angebrachtes Innengewinde 11 einschraubbar ist (siehe Fig. 7).

Die Verbindungsmittel 3 umfassen weiterhin ein Distanzstück 12, das zwischen der Handhabe 8 und der zweiten Klemmbacke 5 angeordnet ist. Dabei erstreckt sich der Bolzen 7 von der Schwenkachse 9 der Handhabe 8 durch das Distanzstück 12 und die zweite Klemmbacke 5 an dem Abschnitt 6 des Lenkers 1 vorbei in das an der ersten Klemmbacke 4 angebrachte Innengewinde 11 (siehe Fig. 2).

Das Distanzstück 12 ist optional und kann auch weggelassen werden.

Die Handhabe 8 dient als Exzentermittel. Sie weist eine Außenkontur auf, die auf unterschiedlichen Seite der Handhabe 8 einen unterschiedlichen Abstand zur Schwenkachse 9 hat. Dabei ist ein erster, in Fig. 2 dem Distanzstück 12 zugewandter Abschnitt 13 der Außenkontur näher an der Schwenkachse 9 angeordnet als ein zweiter, in Fig. 2 nach unten zeigender Abschnitt 14 der Außenkontur. Durch Verschwenken der Handhabe 8 kann somit der Abstand der Schwenkachse 9 zu dem Distanzstück 12 verändert werden, was zu einem Zusammendrücken oder einem Lösen der Klemmbacken 4, 5 führt, wie im Nachfolgenden noch detaillierter beschrieben wird.

Fig. 2 zeigt einen Zustand der Verbindungsmittel 3, in dem der Lenker 1 relativ zu der Lenkerstütze 2 verschwenkbar ist. Die Richtung des Verschwenkens wird durch den Pfeil 15 in Fig. 2 angedeutet. Weiterhin ist in Fig. 2 der Bolzen 7 nur wenig in das Innengewinde 11 eingeschraubt, so dass noch ein Zwischenraum zwischen der Handhabe 8 und dem Distanzstück 12 vorhanden ist. Auch die Klemmbacken 4, 5 sind in dieser Stellung der Verbindungsmittel 3 noch nicht aufeinander zu bewegt, so dass der Abschnitt 6 des Lenkers 1 noch nicht von den Klemmbacken 4, 5 geklemmt wird.

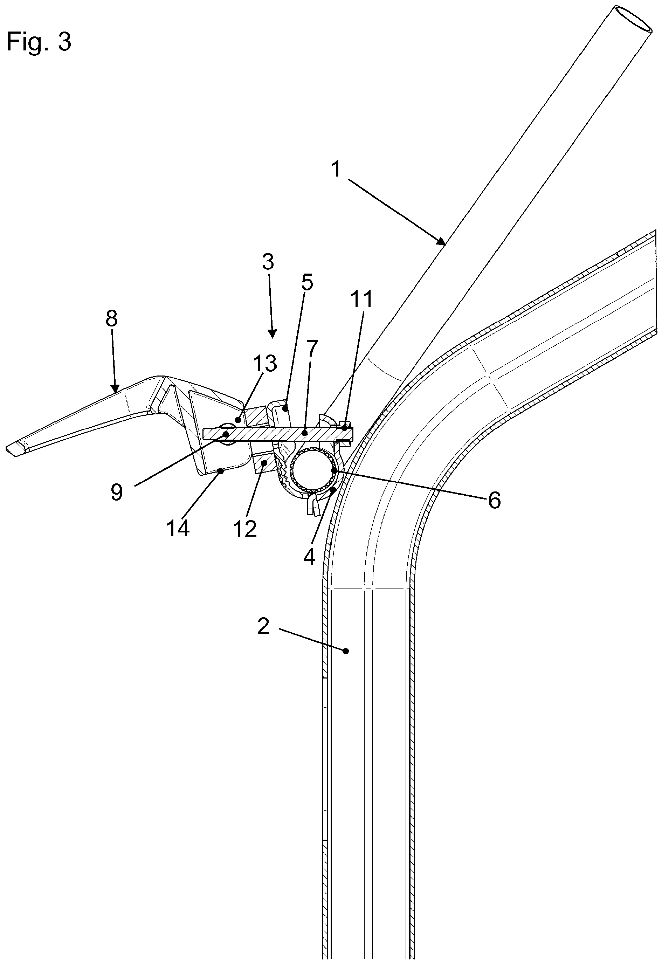

Fig. 3 zeigt einen Zustand der Verbindungsmittel 3, bei dem durch Verdrehen der Handhabe 8 und des daran angelenkten Bolzens 7 um die Längsachse des Bolzens 7 das endseitige Außengewinde 10 des Bolzens weiter in das Innengewinde 11 an der ersten Klemmbacke 4 eingeschraubt ist. In diesem Zustand liegt der erste Abschnitt 13 der Außenkontur der Handhabe 8 an dem Distanzstück 12 an, das wiederum an der zweiten Klemmbacke 5 anliegt.

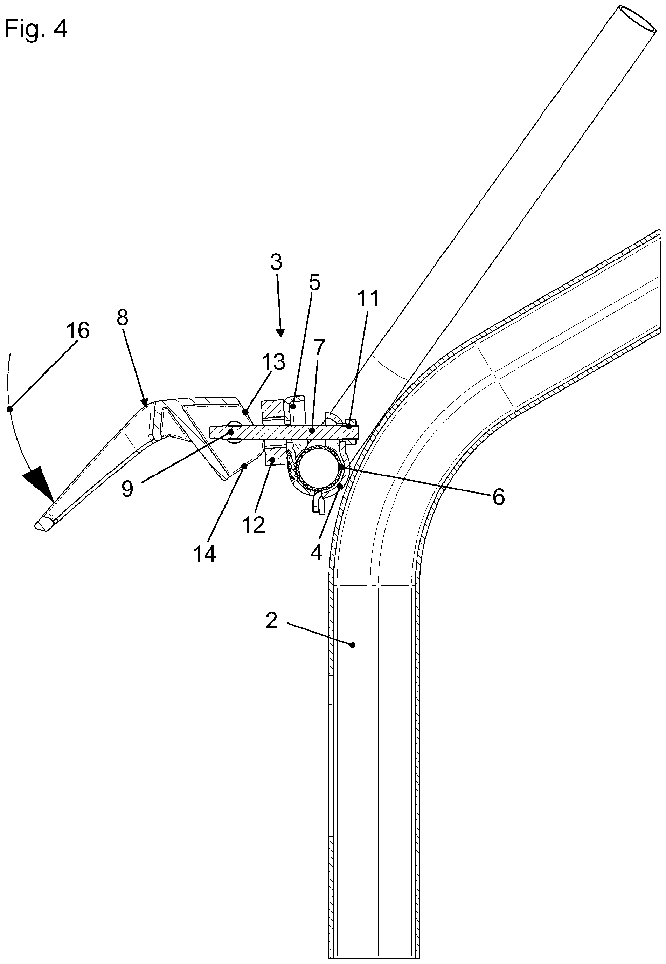

In Fig. 4 ist ein Zustand der Verbindungsmittel 3 abgebildet, bei dem die Handhabe 8 etwas nach unten längs des Pfeils 16 um die Schwenkachse 9 verschwenkt wurde. Dadurch liegt ein anderer Bereich der Außenkontor der Handhabe 8 an dem Distanzstück 12 an, wobei sich der Abstand der Schwenkachse 9 und damit des Endabschnitts des im Bereich der Schwenkachse angelenkten Bolzens 7 zum Distanzstück 12 verändert hat. In diesem Zustand beginnt der Bolzen die erste Klemmbacke 4, mit der er über das Innengewinde 11 verbunden ist, gegen die zweite Klemmbacke 5 zu pressen.

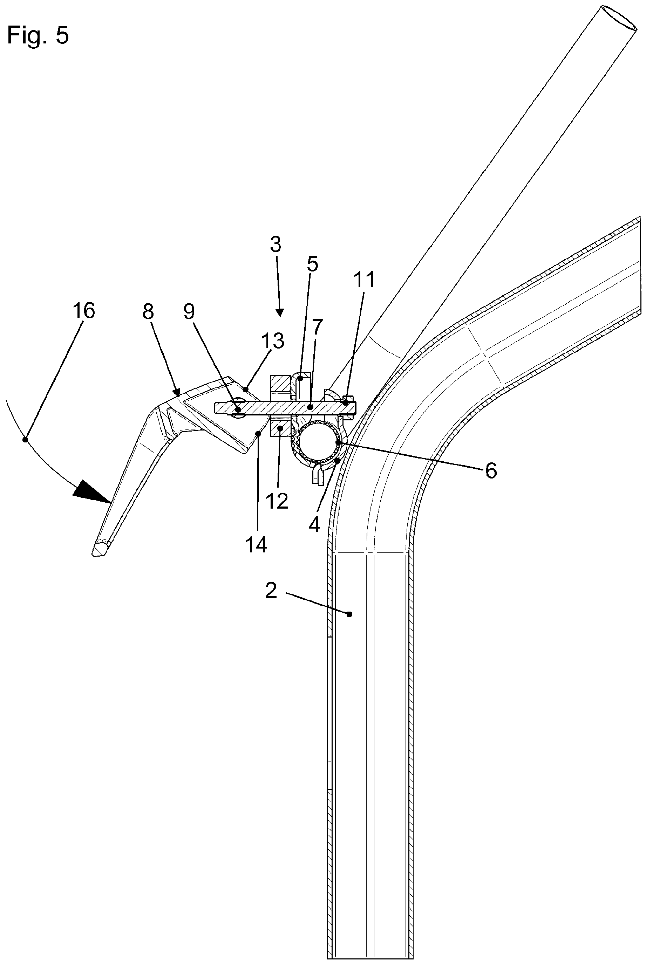

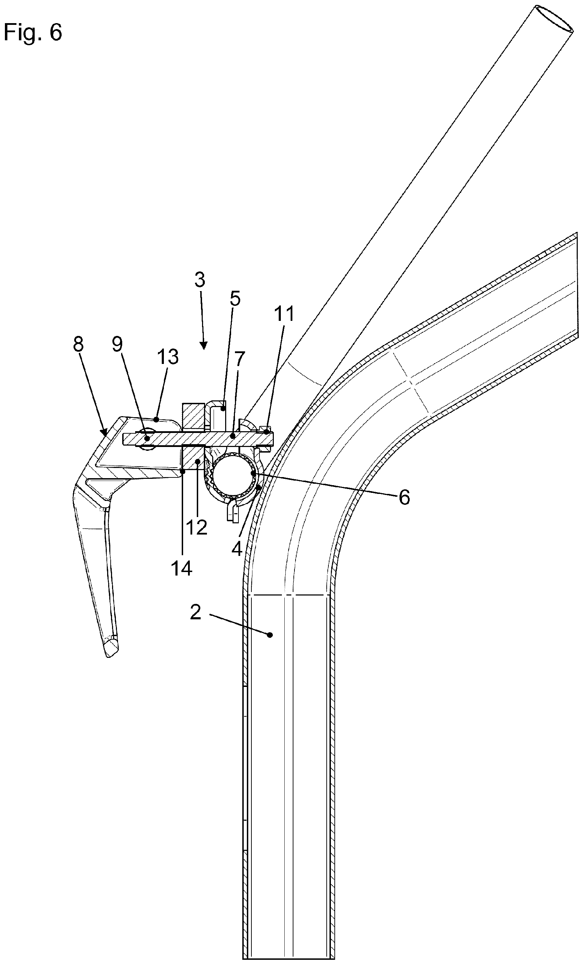

Fig. 5 zeigt die Fortsetzung der Schwenkbewegung der Handhabe 8 längs des Pfeiles 16. In Fig. 6 ist die Endstellung der Schwenkbewegung erreicht. In diesem Zustand der Verbindungsmittel 3 liegt der zweite Abschnitt 14 der Außenkontur der Handhabe 8 an dem Distanzstück 12 an, so dass der Abstand der Schwenkachse 9 zu dem Distanzstück 12 maximal ist. Dadurch zieht der Bolzen 7 die erste Klemmbacke 4 gegen die zweite Klemmbacke 5, so dass diese zusammen den Abschnitt 6 des Lenkers 1 festlegen. In diesem Zustand ist der Lenker 1 nicht mehr relativ zu der Lenkerstütze 2 bewegbar.

Durch Hochschwenken der Handhabe 8 in entgegengesetzter Richtung des Pfeils 16 wird diese Festlegung wieder gelöst, weil die Klemmbacken 4, 5 wieder auseinander bewegt werden.

## Patentansprüche

1. Lenkervorrichtung für ein Trainingsgerät, umfassend
- einen Lenker (1),
- eine Lenkerstütze (2),
- Verbindungsmittel (3), die den Lenker (1) an der Lenkerstütze (2) haltern, wobei in einem ersten Zustand der Verbindungsmittel (3) die Stellung des Lenkers (1) veränderbar ist und wobei in einem zweiten Zustand der Verbindungsmittel (3) die Stellung des Lenkers (1) festgelegt ist,
**dadurch gekennzeichnet, dass** die Verbindungsmittel (3) Exzentermittel umfassen.

2. Lenkervorrichtung nach Anspruch 1, **dadurch gekennzeichnet, dass** die Verbindungsmittel (3) Klemmmittel umfassen, die in dem zweiten Zustand der Verbindungsmittel (3) einen Abschnitt (6) des Lenkers (1) klemmend halten.

3. Lenkervorrichtung nach Anspruch 2, **dadurch gekennzeichnet, dass** die Klemmmittel zwei einander zumindest abschnittsweise gegenüberliegende Klemmbacken (4, 5) umfassen, die an unterschiedlichen Seiten des Abschnitt (6) des Lenkers (1) anliegen.

4. Lenkervorrichtung nach einem der Ansprüche 2 oder 3, **dadurch gekennzeichnet, dass** die Exzentermittel in dem zweiten Zustand der Verbindungsmittel (3) die Klemmmittel an den Abschnitt (6) des Lenkers (1) pressen.

5. Lenkervorrichtung nach einem der Ansprüche 1 bis 4, **dadurch gekennzeichnet, dass** die Verbindungsmittel (3) eine bewegbare, insbesondere verschwenkbare, Handhabe (8) umfassen, durch deren Bewegung, insbesondere deren Verschwenkung, die Verbindungsmittel (3) aus dem ersten Zustand in den zweiten Zustand beziehungsweise aus dem zweiten Zustand in den ersten Zustand überführt werden.

6. Lenkervorrichtung nach Anspruch 5, **dadurch gekennzeichnet, dass** die Exzentermittel an der Handhabe (8) angeordnet sind.

7. Lenkervorrichtung nach einem der Ansprüche 5 oder 6, **dadurch gekennzeichnet, dass** die Handhabe (8) um eine Schwenkachse (9) verschwenkbar ist und eine Außenkontur aufweist, die mit den Klemmmitteln in Wirkverbindung steht, wobei ein erster Abschnitt (13) der Außenkontur einen größeren Abstand zur Schwenkachse (9) aufweist als ein zweiter Abschnitt (14) der Außenkontur.

8. Lenkervorrichtung nach einem der Ansprüche 5 bis 7, **dadurch gekennzeichnet, dass** die Handhabe (8) über einen Bolzen (7) mit den Klemmmitteln verbunden ist, wobei der Bolzen (7) insbesondere an der Schwenkachse (9) oder im Bereich der Schwenkachse (9) der Handhabe (8) gelenkig angebracht ist.

9. Lenkervorrichtung nach Anspruch 8, **dadurch gekennzeichnet, dass** durch ein Verschwenken der Handhabe (8) der Bolzen (7) die Klemmbacken (4, 5) an den Lenker (1) presst.

10. Lenkervorrichtung nach einem der Ansprüche 5 bis 9, **dadurch gekennzeichnet, dass** die Verbindungsmittel (3) ein Distanzstück (12) umfassen, das zwischen der Handhabe (8) und den Klemmmitteln angeordnet ist.

11. Trainingsgerät mit einer Lenkervorrichtung, **dadurch gekennzeichnet, dass** die Lenkervorrichtung eine Lenkervorrichtung nach einem der Ansprüche 1 bis 10 ist.
